# EUROPÄISCHE PATENTSCHRIFT

(11) **EP 3 260 595 B1**
(45) Veröffentlichungstag und Bekanntmachung des Hinweises auf die Patenterteilung: **09.05.2018**
(21) Anmeldenummer: 16001378.5
(22) Anmeldetag: 20.06.2016
(51) Int. Cl.: D06M 16/00, B29B 17/02, C08J 11/10, C08J 11/02

(54) **VERFAHREN ZUR GEWINNUNG VON SCHWER ENTFLAMMBAREN SYNTHESEFASERN AUS TEXTILABFÄLLEN**
METHOD FOR OBTAINING HIGHLY FIRE-RETARDING SYNTHETIC FIBRES FROM TEXTILE SCRAPS
PROCÉDÉ D'EXTRACTION DE FIBRES SYNTHÉTIQUES DIFFICILEMENT INFLAMMABLES À PARTIR DE DÉCHETS TEXTILES

(43) Veröffentlichungstag der Anmeldung: 27.12.2017
(73) Patentinhaber: Viscose Faser GmbH, 3100 St. Pölten (AT)
(72) Erfinder: MÜLLER, Bernhard, 2500 Baden (AT); HERRERO ACERO, Enrique, 1190 Wien (AT); GÜBITZ, Georg, 8047 Hart bei Graz (AT)
(74) Vertreter: Leinweber & Zimmermann

(56) Entgegenhaltungen:
- EP-B1- 1 378 595
- CN-B- 103 556 474
- DE-A1- 4 409 334
- FR-A1- 2 998 572

## Beschreibung

Die Erfindung betrifft ein Verfahren zur Gewinnung von schwer entflammbaren Synthesefasern aus textilen Flächengebilden, die zumindest einen Anteil an schwer entflammbaren Synthesefasern sowie zumindest einen Anteil an flammhemmende Pigmente aufweisenden, enzymatisch hydrolysierbaren Fasern enthalten, wobei der flammhemmende Pigmente aufweisende, hydrolysierbare Faseranteil mittels einer enzymatischen Behandlung aufgelöst wird.

Schwer entflammbare Synthesefasern kommen insbesondere in Hochleistungsanwendungen wie in persönlicher Schutzausrüstung (PSA) als auch im konstruktiven Maschinen- sowie Hoch- und Tiefbau zum Einsatz. Unter "Synthesefasern" werden dabei generell Fasern aus synthetischen, insbesondere erdölbasierenden Polymeren verstanden. Neben ihrer Brandbeständigkeit verfügen sie typischerweise auch über hohe Festigkeiten von größer als 20 cN/tex im konditionierten Zustand. Fasern, die zu dieser Kategorie zählen, sind überwiegend aus aromatischen Polyamiden (Aramiden) und/oder Polyimiden bestehend und dem Fachmann unter Markennamen wie Nomex®, Kevlar, Twaron®, Conex®, Euramid®, Bluestar, PBI, Arselon® oder Kermel® bekannt. Man unterscheidet je nach Art der Faserlänge zwischen Filamenten, langen und kurzen Stapelfasern sowie Ultrakurzfasern mit einer Länge unter 5 mm, beispielsweise in Form von Aramid-Papieren.

Die genannten Synthesefasern weisen neben ihren positiven Eigenschaften wie Flamm- sowie Hitzebeständigkeit und hoher spezifischer Festigkeit auch Nachteile wie z.B. mangelnden Tragekomfort oder mangelnde Färbbarkeit aufgrund weitestgehend chemisch inerter Faseroberflächen auf. Die Kombination von Synthesefasern mit Fasern mit gutem Feuchtigkeitsmanagement und hohem intrinsischen Tragekomfort wie Baumwolle, Wolle oder Viskose bzw. Rayon in einem Mischgewebe bietet somit eine synergistische Kombination der Vorteile wie beispielsweise Flammbeständigkeit, hoher Reißfestigkeit und hohem Tragekomfort. Im Fall von persönlicher Schutzausrüstung, sei es im militärischen wie auch zivilen Bereich, kommen vor allem Stapelfasern mit einer Länge kleiner 150 mm und größer 30 mm zum Einsatz. Die verwendete Faserlänge ist abhängig vom Spinnverfahren und dem gewünschten Mischungspartner.

Die schwere Entflammbarkeit ist bei persönlicher Schutzbekleidung, beispielsweise im Brandbekämpfungs- oder militärischen Bereich, von spezieller Bedeutung. Als Maß für die Entflammbarkeit von Fasern wird der "Limiting Oxygen Index" (LOI) herangezogen. Der Limiting Oxygen Index stellt die minimale Konzentration an Sauerstoff (in Prozent) in einem Stickstoff-Sauerstoffgemisch dar, bei der die Verbrennung eines Prüfkörpers aus den zu prüfenden Fasern gerade noch aufrechterhalten wird. Fasern mit einem LOI von größer gleich 25 werden als "schwer entflammbar" bezeichnet. Gängige Normen und Standardtestbedingungen zur Bestimmung des LOI sind dem Fachmann bekannt.

Typische Faserkombinationen in Mischgeweben von persönlicher Schutzbekleidung stellen beispielsweise aromatische Polyamide wie meta- oder para-Aramide als schwer entflammbare Synthesefaser sowie permanent flammhemmende Viskose als Faser natürlichen Ursprungs dar. Möglich ist auch eine Faserkombination aus beispielsweise drei verschiedenen Fasertypen, wie beispielsweise Aramid-Nylon-Viskose (bekannt unter dem Markennamen "Defender™ M") oder Polybenzimidazol (PBI)-Viskose-Aramid (Markenname "PBI TRIGUARD™"). In vielen Fällen enthalten die Viskosefasern bzw. das Mischgewebe zusätzlich noch Farbpigmente oder flammhemmende Pigmente.

Der schwer entflammbare Synthesefaseranteil des Gewebes stellt einen Wertstoff dar, dessen Wiedergewinnung aus Textilabfällen und neuerlicher Einsatz in Textilien aus wirtschaftlichen Gründen sehr vorteilhaft ist. Die dem Fachmann bekannten Herstellungsprozesse der schwer entflammbaren Synthesefasern sind sehr energieintensiv und basieren auf toxischen Lösungsmitteln, die eine spezielle Spinn- bzw. Anlagentechnologie erfordern. Aufgrund der hohen Herstellkosten und der hohen Nachfrage bewegen sich derartige Fasern typischerweise in einem Hochpreissegment. Deswegen wäre ein Verfahren zu ihrer Gewinnung aus Textilabfällen, das die durchschnittliche Faserlänge, sowie die Faserlängenverteilung der Synthesefasern, insbesondere aus Stapelfasermischungen im Zuge der Wiedergewinnung nicht wesentlich verändert, sowohl aus ökonomischer als auch aus ökologischer Sicht ein deutlicher Mehrwert.

Bislang werden beispielsweise zur Entsorgung anfallende, aramidfaserhaltige textile Flächengebilde wie Gewebe typischerweise auf herkömmlichen Reißanlagen zu Reißfasern verarbeitet. Als nachteilig erweist sich dabei, dass durch den mechanischen Reißprozess die durchschnittliche Faserlänge der rezyklierten Aramidfasem stark verkürzt wird, weshalb sie sich zwar noch für die Anwendung im Vliesbereich oder im Faserverbundbereich eignen, kaum jedoch aber für die Wiederverwendung im Textilbereich. Die EP1378595B1 offenbart zwar ein Verfahren zur Herstellung von im Textilbereich wieder einsetzbaren Aramidfasem, wobei die aramidhaltigen Textilien in einem die Faserlänge nicht beeinflussenden mechanischen Hackprozess zerkleinert werden, allerdings ist dieses Verfahren nur für reine bzw. vorsortierte Aramidfasern bzw. -gewebe einsetzbar. Die Behandlung von aramidhaltigen Mischgeweben nach diesem Verfahren, in denen auch flammhemmende Pigmente aufweisende Viskose enthalten ist, würde nicht zur Wiedergewinnung von reinen Aramidfasern führen.

Der Erfindung liegt daher die Aufgabe zugrunde, die oben beschriebenen Nachteile zu vermeiden.

Zur Lösung dieser Aufgabe sieht die Erfindung ein Verfahren zur Gewinnung von schwer entflammbaren Synthesefasern mit einem Limiting Oxygen Index von größer gleich 25, bevorzugt größer gleich 28 aus textilen Flächengebilden vor, die zumindest einen Anteil an schwer entflammbaren Synthesefasern sowie zumindest einen Anteil an flammhemmende Pigmente aufweisenden, enzymatisch hydrolysierbaren Fasern enthalten, wobei das textile Flächengebilde mittels einer Enzyme enthaltenden Lösung zur Auflösung des flammhemmende Pigmente aufweisenden, hydrolysierbaren Faseranteils behandelt wird und danach eine Abtrennung des aus Synthesefasern bestehenden verbleibenden Anteils des textilen Flächengebildes vom Reaktionsgemisch enthaltend Enzyme und hydrolysierte Faserabbauprodukte sowie eine Abtrennung und Wiedergewinnung der aus den hydrolysierbaren Fasern freigesetzten flammhemmenden Pigmente erfolgt. Die schwer entflammbaren Synthesefasern können auf diese Weise aus textilen Flächengebilden wie Geweben, Gestricken, Gezwirnen, Gewirken oder Gelegen möglichst schonend und ohne wesentliche Beeinflussung der Faserlänge gewonnen werden. Die textilen Flächengebilde stammen beispielsweise aus Alttextilien bzw. Altbekleidung, aber auch aus Abfällen oder Ausschussware aus der Textilproduktion oder sonstigen industriellen Anwendungen, in denen die textilen Flächengebilde zur Anwendung kommen. Derart wiedergewonnene Synthesefasern sind wiederum zur Herstellung von textilen Flächengebilden für Neutextilien verwendbar.

Es ist generell bekannt, dass cellulosische Fasern aus beispielsweise Regeneratcellulose bzw. Viskose durch eine durch Enzyme katalysierte Hydrolyse abgebaut werden können (Shojaei et al., Appl Biochem Biotechnol. (2012) 166:744-52). Bevorzugt wird bei der enzymatischen Hydrolyse der cellulosische Anteil der Faser zu mehr als 85%, besonders bevorzugt zu mehr als 90% zu Glukose abgebaut und die Fasermatrix komplett aufgelöst.

Das erfindungsgemäße Verfahren baut auf diesem Prinzip auf. Als Ausgangsmaterialien dienen Textilabfälle, beispielsweise zu entsorgende Schutzbekleidung, deren Materialaufbau beispielsweise aus einem Mischgewebe aus schwer entflammbaren Synthesefasern wie beispielsweise meta- oder para- Aramidfasern sowie hydrolysierbaren Fasern wie beispielsweise Viskosefasern, insbesondere permanent flammhemmende Modalfasern besteht.

Der Gesamtanteil an schwer entflammbaren Synthesefasern im textilen Flächengebilde beträgt dabei größer gleich 5 Gewichtsprozent, bevorzugt größer gleich 15 Gewichtsprozent, besonders bevorzugt größer gleich 25 Gewichtsprozent. Der Gesamtanteil an enzymatisch hydrolysierbaren Fasern im textilen Flächengebilde liegt bei größer gleich 5 Gewichtsprozent, bevorzugt größer gleich 30 Gewichtsprozent, besonders bevorzugt größer gleich 50 Gewichtsprozent. Die Textilabfälle können optional vor der weiteren Behandlung mechanisch grob zerkleinert bzw. geschnitten werden, ohne aber den überwiegenden Teil der Fasern selbst nennenswert zu beschädigen bzw. zu verkürzen.

Die Behandlung der textilen Flächengebilde mittels einer Enzyme enthaltenden Lösung, bevorzugter Weise einer wässrigen Lösung, erfolgt typischerweise in einem Batchverfahren. Im Fall der Verwendung einer wässrigen Lösung liegt ihr pH-Wert dabei unter gepufferten Bedingungen zwischen 4 und 6 und richtet sich nach den für die jeweiligen Enzyme notwendigen Reaktionsbedingungen. Die textilen Flächengebilde werden durch Rühren, Schütteln oder ähnliche Prozesse intensiv mit der wässrigen Lösung vermischt und mit den Enzymen versetzt. Im Fall von cellulosischen Fasern werden als Enzyme bevorzugt Cellulasen, die Endoglucanasen und/oder Exoglucanasen, insbesondere auch β-Glucosidase enthalten, eingesetzt. Die enzymatische Behandlung erfolgt bei einer Temperatur von weniger als 100° C, bevorzugt von weniger als 80° C, besonders bevorzugt von weniger als 60° C. Beispielsweise hat sich eine Behandlungstemperatur von 50° C als effektiv hinsichtlich besonders kurzer Reaktionszeiten herausgestellt.

Die zum Einsatz kommenden Enzyme und ihre Substratspezifität sind bevorzugt so zu wählen, dass sie imstande sind, den hydrolysierbaren Faseranteil zu mehr als 90%, bevorzugt zu mehr als 99% aufzulösen, andererseits aber die schwerentflammbaren Synthesefasern makroskopisch nicht zu verändern. Auch Gemische von verschiedenen Enzymen können zum Einsatz kommen.

Durch die enzymatische Hydrolyse bzw. Auflösung des cellulosischen Faseranteils verbleibt eine textile Struktur aus reiner Synthesefaser, die vom Reaktionsgemisch, das u.a. noch Enzyme, Puffersalze sowie Glukose und mögliche andere cellulosische Abbauprodukte enthält, abgetrennt werden kann. Die Abtrennung der verbleibenden textilen Struktur, die - abhängig von der Art des Ausgangsmaterial - in Form von Einzelfasern, eines Faserbündels oder aber als flächige Struktur vorliegen kann, erfolgt beispielsweise mit einem dem Fachmann geläufigen Filtrationsschritt, wobei die textile Struktur im Filter verbleibt, während das wässrige Reaktionsgemisch das Filtrat bildet. Im Fall der Behandlung von homogenen Fasermischungen wurde eine flächige textile Struktur erhalten, die überraschenderweise über eine ausreichende mechanische Festigkeit verfügt, so dass sie - alternativ zu einer Filtration - auch durch einfaches Herausheben bzw. Herausziehen aus der Behandlungslösung vom Reaktionsgemisch zu separieren ist.

Feste Zusatzstoffe wie Pigmente, die entweder in die hydrolysierbaren Fasern eingesponnen oder an ihrer Oberfläche fixiert sind, werden durch die enzymatische Auflösung des hydrolysierbaren Faseranteils ebenfalls freigesetzt und können wiedergewonnen werden. Die Pigmente können unterschiedlicher Natur und Funktionalität sein, beispielsweise flammhemmende Pigmente, Farb-, Leucht-, Mattierungspigmente, Infrarot- oder Röntgenstrahlung absorbierende oder reflektierende Pigmente oder auch als Pigmente enthaltene wachsartige phase-change materials und aufgemahlene Ionenaustauscher. Die Pigmente können auch in Form eines Pigmentgemisches aus unterschiedlichen Pigmenten vorliegen, beispielsweise eines flammhemmenden Organophosphorpigments und eines Farb- und/oder Leuchtpigments. Beispielhaft ist der Einsatz derartiger Pigmente in AT 513426 A1, AT 508687 A1, AT 511638 A1, AT 509801 A1 oder AT 510229 B1 beschrieben.

Die Abtrennung der Pigmente nach der enzymatischen Hydrolyse erfolgt bevorzugt nach dem Separationsschritt für die Abtrennung des verbleibenden Synthesefaseranteils des textilen Flächengebildes. Nach der Separation der textilen Struktur mittels Filtration bzw. mechanischen Heraushebens finden sich die Pigmentteilchen in der verbliebenen Reaktionslösung wieder. Die Abtrennung der Pigmentteilchen von dieser kann beispielsweise durch einen dem Fachmann bekannten Filtrationsschritt erfolgen, bei dem die Filtrationsvorrichtung über eine derartige Porengröße verfügt, dass die Pigmentteilchen im Filter festgehalten werden und den Filterkuchen bilden, oder aber alternativ durch Dekantation der zu Boden gesunkenen Pigmentteilchen von der überstehenden Reaktionsflüssigkeit.

Eventuell an dem textilen Flächengebilde angebrachte und durch die enzymatische Behandlung freigesetzte Applikationen aus Metall oder Kunststoff wie beispielsweise Knöpfe oder Reißverschlüsse können auf diese Weise ebenfalls abgeschieden werden.

Der nach der Hydrolyse erhaltene, aus flammhemmenden Synthesefasern bestehende verbleibende Anteil des textilen Flächengebildes kann vor seiner Auftrennung in einzelne Fasern optional einem Reinigungsschritt zur oxidativen oder reduktiven Entfernung von auf den Synthesefasern verbliebenen Farbstoffen oder sonstigen Störstoffen wie beispielsweise einer vorhandenen hydrophobierenden oder antimikrobiellen Ausrüstung unterzogen werden. Das textile Flächengebilde wird dabei einem dem Fachmann bekannten und im Textilbereich üblichen oxidativen oder reduktiven Faserreinigungsprozess in einer wässrigen Lösung unterworfen, wobei die Oxidation beispielhaft mit einem Gemisch aus Natriumhydroxid, Wasserstoffperoxid (35%) sowie einem Bleichhilfsmittel (beispielsweise Contavan® ALR) erfolgt, die Reduktion beispielhaft mit einer alkalischen Natriumhydrosulfitlösung. Alternativ können Verunreinigungen auch mit nicht wässrigen Lösungsmitteln von der Faser entfernt werden, wobei Bedacht genommen werden muss, dass diese Lösungsmittel die Faser selbst nicht anlösen oder auflösen. Besonders geeignet sind hierfür Lösungsmittel bzw. Lösungsmittelgemische mit einer Dielektrizitätskonstanten kleiner als 65 bei 25° C Raumtemperatur.

In Abhängigkeit vom Ausgangsmaterial kann der gewonnene Synthesefaseranteil bereits in Form von Einzelfasern bzw. eines Faserbündels oder aber einer flächigen Struktur vorliegen. In letzterem Fall kann die gewonnene flächige Struktur in einem anschließenden mechanischen Trennprozess wieder in die einzelnen Synthesefasern ohne nennenswerte Verkürzung der Faserlänge rückgeführt werden. Dies erfolgt beispielsweise dadurch, dass die flächige Struktur mittels eines rotierenden, stumpfen Schlagelementes - wie aus der DE 19900770 A1 bekannt - in ihre Faserbestandteile zerlegt wird.

Die mit dem erfindungsgemäßen Verfahren gewonnenen schwer entflammbaren Synthesefasern weisen eine Abweichung in ihrer durchschnittlichen Faserlänge von weniger als 30%, bevorzugt weniger als 15%, besonders bevorzugt weniger als 10% im Vergleich mit Primärfasern derselben chemischen Struktur auf und können wieder zur Herstellung von Geweben oder anderen textilen Flächengebilden eingesetzt werden. Die Bezeichnung "Primärfasern" steht in diesem Zusammenhang für Fasern, die neu produziert wurden.

Die im verbleibenden Reaktionsgemisch enthaltenden Enzyme bzw. das Enzymgemisch können beispielsweise mit einem Ultrafiltrations- und optional nachfolgendem Nanofiltrationsprozess wie beschrieben in Qi et al., Bioresour Technol. 2012 Jan; 104:466-72 von der im Fall von cellulosischen Fasern anfallenden Glukose und anderen durch die Hydrolyse entstandenen niedermolekularen Faserabbauprodukten abgetrennt und wiederum der Hydrolysebehandlung der Textilabfälle zugeführt werden. Die anfallende Glukose kann beispielsweise für die Herstellung von Bioethanol zum Einsatz kommen.

Zwischen den einzelnen Verfahrensschritten können der verbleibende Anteil des textilen Flächengebildes bzw. die darin enthaltenen Fasern optional jeweils einer dem Fachmann naheliegenden Waschbehandlung mit Wasser oder anderen geeigneten Lösungsmitteln zur Entfernung von Ausgangs- bzw. Reaktionsprodukten unterworfen werden.

Das nachfolgende Beispiel zeigt eine Ausführungsform des erfindungsgemäßen Verfahrens.

### Beispiel 1:

10 g eines Double Face Mesh-Gestrickes mit einem spezifischen Gewicht von 187 g/m², bestehend aus einem Außenmaterial aus flammgehemmter Viskose (Viscont FR 110 f46 S90, enthaltend 18 Gewichts% Exolit 5060 als flammhemmendes Pigment) und einem Innenmaterial aus einem Stapelfasergemisch (200 dtex) aus 70% Viskose und 30% Aramid, wurden in 49 ml einer wässrigen Pufferlösung (Zitronensäure 50 mmol, pH = 4,8) gegeben. Anschließend wurden 1 ml Cellic® CTec 3 (Novozymes) als Enzyme zugegeben und bei 50°C und 100 rpm für 24 Stunden geschüttelt. Nach 24 Stunden war eine vollständige Auflösung des Viskosefaseranteils aufgetreten, der verbleibende Aramidfaseranteil lag in Form einer flächigen Struktur vor und konnte durch Herausziehen aus dem Reaktionsgemisch entfernt werden. Die freigesetzten flammhemmenden Pigmente lagen in kolloidaler Form vor und wurden mittels Schwerkraftfiltration von der Reaktionslösung abgetrennt.

Die gegenständliche Erfindung ist nicht auf Aramidfasern oder sonstige aromatische Polyamide als zu gewinnende schwer entflammbare Synthesefasern beschränkt. Das erfindungsgemäße Verfahren eignet sich prinzipiell ebenso für die Gewinnung von sonstigen schwer entflammbaren Synthesefasern wie beispielsweise aus Polybenzimidazol (PBI), p-Phenyl-2,6-Benzobisoxazol (PBO), Polyimid, Polyimidamid, Modacryl, weiters flammgehemmte Polyamidfasern, flammgehemmte Acrylfasern, Melaminfasern oder flammgehemmte Elastane sowie Mischungen dieser Fasern. Der im Ausgangsmaterial enthaltene Synthesefaseranteil kann optional auch aus einem Fasergemisch, beispielsweise aus para- und meta-Aramidfasern bestehen. In diesem Fall lässt sich mit diesem Verfahren wiederum das Synthesefasergemisch gewinnen.

Die mit dem erfindungsgemäßen Verfahren hydrolysierbaren Fasern beschränken sich nicht nur auf cellulosische Fasern wie Regeneratcellulosefasern, Carbamatfasern, Lyocellfasern und aus ionischen Flüssigkeiten ersponnene Fasern oder Baumwollfasern. Es ist ebenso denkbar, andere enzymatisch hydrolysierbare Faserarten, wie beispielsweise Fasern aus Polyester oder Polyamid 6 bzw. Polyamid 6.6 (Nylon) im erfindungsgemäßen Verfahren zu hydrolysieren. Im Fall von Polyamid 6 bzw. Polyamid 6.6 kommen als Enzyme beispielsweise Nylon-Hydrolasen statt Cellulasen zur Anwendung. Weiters besteht die Möglichkeit, auch ein textiles Flächengebilde enthaltend zumindest zwei unterschiedliche Arten hydrolysierbarer Fasern, wie beispielsweise Viskose und Nylon gemeinsam, d.h. gleichzeitig in einem geeigneten Reaktor mittels eines passenden Enzymgemisches aus Cellulasen sowie Nylon-hydrolysierenden Enzymen hydrolytisch abzubauen. Ebenso ist eine serielle Hydrolyse, beispielsweise zuerst die Hydrolyse der cellulosischen Fasern und erst in einem zweiten, separaten Schritt die Hydrolyse der Nylonfasem denkbar.

Die Erfindung ist nicht auf die im Ausführungsbeispiel einzeln gezeigten Merkmale eingeschränkt. Vielmehr können die Merkmale der nachfolgenden Ansprüche und der vorstehenden Beschreibung einzeln oder in Kombination für die Verwirklichung der Erfindung in ihren verschiedenen Ausführungsformen wesentlich sein.

## Patentansprüche

1. Verfahren zur Gewinnung von schwer entflammbaren Synthesefasern mit einem Limiting Oxygen Index von größer gleich 25, bevorzugt größer gleich 28 aus textilen Flächengebilden, die zumindest einen Anteil an schwer entflammbaren Synthesefasern sowie zumindest einen Anteil an flammhemmende Pigmente aufweisenden, enzymatisch hydrolysierbaren Fasern enthalten, **dadurch gekennzeichnet, dass** das textile Flächengebilde mittels einer Enzyme enthaltenden Lösung zur Auflösung des flammhemmenden Pigmente aufweisenden, hydrolysierbaren Faseranteils behandelt wird und danach eine Abtrennung des aus Synthesefasern bestehenden verbleibenden Anteils des textilen Flächengebildes vom Reaktionsgemisch enthaltend Enzyme und hydrolysierte Faserabbauprodukte sowie eine Abtrennung und Wiedergewinnung der aus den hydrolysierbaren Fasern freigesetzten flammhemmenden Pigmente erfolgt.

2. Verfahren nach Anspruch 1, **dadurch gekennzeichnet, dass** es sich bei dem textilen Flächengebilde um Gewebe, Gestricke, Gezwirne, Gewirke oder Gelege handelt.

3. Verfahren nach einem der Ansprüche 1 oder 2, **dadurch gekennzeichnet, dass** der Gesamtanteil an schwer entflammbaren Synthesefasern im textilen Flächengebilde größer gleich 5 Gewichtsprozent, bevorzugt größer gleich 15 Gewichtsprozent, besonders bevorzugt größer gleich 25 Gewichtsprozent ist.

4. Verfahren nach einem der Ansprüche 1 bis 3, **dadurch gekennzeichnet, dass** der Gesamtanteil an enzymatisch hydrolysierbaren Fasern im textilen Flächengebilde größer gleich 5 Gewichtsprozent, bevorzugt größer gleich 30 Gewichtsprozent, besonders bevorzugt größer gleich 50 Gewichtsprozent ist.

5. Verfahren nach einem der Ansprüche 1 bis 4, **dadurch gekennzeichnet, dass** der hydrolysierbare Faseranteil cellulosische Fasern, bevorzugt aus Regeneratcellulose enthält.

6. Verfahren nach einem der Ansprüche 1 bis 5, **dadurch gekennzeichnet, dass** der hydrolysierbare Faseranteil Fasern aus Polyamid 6 oder Polyamid 6.6 enthält.

7. Verfahren nach einem der Ansprüche 1 bis 6, **dadurch gekennzeichnet, dass** die enzymatische Behandlung des textilen Flächengebildes bei einer Temperatur von weniger als 100°C, bevorzugt von weniger als 80°C, besonders bevorzugt von weniger als 60°C erfolgt.

8. Verfahren nach einem der Ansprüche 1 bis 7, **dadurch gekennzeichnet, dass** die Abtrennung und Wiedergewinnung der aus den hydrolysierbaren Fasern freigesetzten flammhemmenden Pigmente nach der Abtrennung des aus Synthesefasern bestehenden Anteils des textilen Flächengebildes erfolgt.

9. Verfahren nach einem der Ansprüche 1 bis 8, **dadurch gekennzeichnet, dass** der aus Synthesefasern bestehende Anteil des textilen Flächengebildes nach seiner Abtrennung vom Reaktionsgemisch mit einem Oxidationsmittel zur Entfernung von Farb- und/oder Störstoffen behandelt wird.

10. Verfahren nach einem der Ansprüche 1 bis 8, **dadurch gekennzeichnet, dass** der aus Synthesefasern bestehende Anteil des textilen Flächengebildes nach seiner Abtrennung vom Reaktionsgemisch mit einem Reduktionsmittel zur Entfernung von Farb- und/oder Störstoffen behandelt wird.

11. Verfahren nach einem der Ansprüche 1 bis 10, **dadurch gekennzeichnet, dass** der abgetrennte, verbleibende Anteil des textilen Flächengebildes in die einzelnen Synthesefasern aufgetrennt wird.

12. Verfahren nach einem der Ansprüche 1 bis 11, **dadurch gekennzeichnet, dass** die Enzyme nach der Behandlung des textilen Flächengebildes aus dem Reaktionsgemisch abgetrennt und zur enzymatischen Behandlung rückgeführt werden.

13. Verfahren nach einem der Ansprüche 1 bis 12, bei dem die mittlere Faserlänge der gewonnenen, schwer entflammbaren Synthesefasern um weniger als 30%, bevorzugt weniger als 15%, besonders bevorzugt weniger als 10% von der mittleren Faserlänge der primär in dem behandelten textilen Flächengebilde enthaltenen Synthesefasern abweicht.

14. Verfahren nach einem der Ansprüche 1 bis 13, bei dem aus den aus textilen Flächengebilden gewonnenen schwer entflammbaren Synthesefasern mit einem Limiting Oxygen Index von größer gleich 25, bevorzugt größer gleich 28 neue textile Flächengebilde hergestellt werden.

## Claims

1. A method for obtaining highly fire-retarding synthetic fibres with a limiting oxygen index of greater than 25, preferably greater than 28, from textile fabrics which contain at least a portion of highly fire-retarding synthetic fibres and at least a portion of enzymatically hydrolysable fibres comprising fire retardant pigments, **characterised in that** the textile fabric is treated by means of a solution containing enzymes for dissolving the hydrolysable fibre portion comprising fire retardant pigments, and then separation of the remaining portion of the textile fabric made of synthetic fibres from the reaction mixture containing enzymes and hydrolysed fibre decomposition products and separation and recovery of the fire retardant pigments released from the hydrolysable fibres takes place.

2. The method according to Claim 1, **characterised in that** the textile fabric is a woven, knitted, twined, crocheted or laid fabric.

3. The method according to either of Claims 1 or 2, **characterised in that** the entire portion of highly fire-retarding synthetic fibres in the textile fabric is greater than 5 percent by weight, preferably greater than 15 percent by weight, particularly preferably greater than 25 percent by weight.

4. The method according to any of Claims 1 to 3, **characterised in that** the overall portion of enzymatically hydrolysable fibres in the textile fabric is greater than 5 percent by weight, preferably greater than 30 percent by weight, particularly preferably greater than 50 percent by weight.

5. The method according to any of Claims 1 to 4, **characterised in that** the hydrolysable fibre portion contains cellulosic fibres, preferably made of regenerated cellulose.

6. The method according to any of Claims 1 to 5, **characterised in that** the hydrolysable fibre portion contains fibres made of polyamide 6 or polyamide 6.6.

7. The method according to any of Claims 1 to 6, **characterised in that** the enzymatic treatment of the textile fabric takes place at a temperature of less than 100°C, preferably of less than 80°C, particularly preferably of less than 60°C.

8. The method according to any of Claims 1 to 7, **characterised in that** the separation and recovery of the flame retardant pigments released from the hydrolysable fibres takes place after the separation of the portion of the textile fabric made of synthetic fibres.

9. The method according to any of Claims 1 to 8, **characterised in that** the portion of the textile fabric made of synthetic fibres is treated with an oxidising agent after its separation from the reaction mixture in order to remove any colourants and/or contaminants.

10. The method according to any of Claims 1 to 8, **characterised in that** the portion of the textile fabric made from synthetic fibres is treated with a reduction agent after its separation from the reaction mixture in order to remove any colourants and/or contaminants.

11. The method according to any of Claims 1 to 10, **characterised in that** separated, remaining portion of the textile fabric is separated into the individual synthetic fibres.

12. The method according to any of Claims 1 to 11, **characterised in that** the enzymes are separated from the reaction mixture after the treatment of the textile fabric and are recycled for enzymatic treatment.

13. The method according to any of Claims 1 to 12, wherein the average fibre length of the highly fire-retarding synthetic fibres that are obtained differs by less than 30%, preferably less than 15%, particularly preferably less than 10% from the average fibre length of the synthetic fibres primarily contained in the treated textile fabric.

14. The method according to any of Claims 1 to 13, wherein new textile fabrics are produced from the highly fire-retarding synthetic fibres obtained from textile fabrics with a limiting oxygen index of greater than 25, preferably greater than 28.

## Revendications

1. Procédé d'obtention de fibres synthétiques difficilement inflammables présentant un indice critique d'oxygène supérieur ou égal à 25, de préférence supérieur ou égal à 28, à partir de nappes textiles contenant au moins une part de fibres synthétiques difficilement inflammables ainsi qu'au moins une part de fibres enzymatiquement hydrolysables présentant des pigments ignifuges, **caractérisé en ce que** la nappe textile est traitée au moyen d'une solution contenant des enzymes afin de dissoudre la part de fibres hydrolysables présentant des pigments ignifuges, avant d'être soumise à une séparation de la part de la nappe textile restante, composée de fibres synthétiques, vis-à-vis du mélange réactionnel contenant des enzymes et des produits de dégradation de fibres hydrolysés ainsi qu'à une séparation et une récupération des pigments ignifuges dégagés par les fibres hydrolysables.

2. Procédé selon la revendication 1, **caractérisé en ce que** la nappe textile consiste en un tissu, un tricot, un retors, un tissu à mailles ou non tissé.

3. Procédé selon l'une des revendications 1 ou 2, **caractérisé en ce que** la part totale de fibres synthétiques difficilement inflammables dans la nappe textile est supérieure ou égale à 5 pour cent en poids, de préférence supérieure ou égale à 15 pour cent en poids, tout particulièrement supérieure ou égale à 25 pour cent en poids.

4. Procédé selon l'une des revendications 1 à 3, **caractérisé en ce que** la part totale de fibres enzymatiquement hydrolysables dans la nappe textile est supérieure ou égale à 5 pour cent en poids, de préférence supérieure ou égale à 30 pour cent en poids, tout particulièrement supérieure ou égale à 50 pour cent en poids.

5. Procédé selon l'une des revendications 1 à 4, **caractérisé en ce que** la part de fibres hydrolysables contient des fibres cellulosiques, de préférence à base de cellulose régénérée.

6. Procédé selon l'une des revendications 1 à 5, **caractérisé en ce que** la part de fibres hydrolysables contient des fibres de polyamide 6 ou de polyamide 6.6.

7. Procédé selon l'une des revendications 1 à 6, **caractérisé en ce que** le traitement enzymatique de la nappe textile s'effectue à une température inférieure à 100°C, de préférence inférieure à 80 °C, tout particulièrement inférieure à 60 °C.

8. Procédé selon l'une des revendications 1 à 7, **caractérisé en ce que** l'opération de séparation et de récupération des pigments ignifuges dégagés par les fibres hydrolysables a lieu après la séparation de la part de la nappe textile composée de fibres synthétiques.

9. Procédé selon l'une des revendications 1 à 8, **caractérisé en ce que** la part de la nappe textile composée de fibres synthétiques est traitée, après sa séparation du mélange réactionnel, avec un agent oxydant afin d'éliminer les colorants et/ou composés interférents.

10. Procédé selon l'une des revendications 1 à 8, **caractérisé en ce que** la part de la nappe textile composée de fibres synthétiques est traitée, après sa séparation du mélange réactionnel, avec un agent réducteur afin d'éliminer les colorants et/ou composés interférents.

11. Procédé selon l'une des revendications 1 à 10, **caractérisé en ce que** la partie restante, séparée, de la nappe textile est défaite en ses fibres synthétiques individuelles.

12. Procédé selon l'une des revendications 1 à 11, **caractérisé en ce que**, suite au traitement de la nappe textile, les enzymes sont séparées du mélange réactionnel et sont renvoyées vers le traitement enzymatique.

13. Procédé selon l'une des revendications 1 à 12, dans lequel la longueur moyenne des fibres synthétiques difficilement inflammables obtenues diffère de moins de 30 %, de préférence de moins de 15 %, tout particulièrement de moins de 10 % de la longueur moyenne des fibres synthétiques contenues initialement dans la nappe textile traitée,

14. Procédé selon l'une des revendications 1 à 13, dans lequel de nouvelles nappes textiles sont produites grâce aux fibres synthétiques difficilement inflammables, obtenues à partir de nappes textiles, présentant un indice critique d'oxygène supérieur ou égal à 25, de préférence supérieur ou égal à 28.
